# EUROPÄISCHE PATENTSCHRIFT

(11) **EP 0 874 510 B1**
(45) Veröffentlichungstag und Bekanntmachung des Hinweises auf die Patenterteilung: **20.02.2008**
(21) Anmeldenummer: 98106883.6
(22) Anmeldetag: 16.04.1998
(51) Int. Cl.: H04M 9/02

(54) **Türsprechanlage mit einer Zweidraht-Busleitung**
Two-wire bus intercom apparatus
Dispositif d'interphone avec bus à deux fils

(30) Priorität: 21.04.1997 DE 19716598
(43) Veröffentlichungstag der Anmeldung: 28.10.1998
(73) Patentinhaber: Ritto GmbH & Co.KG, 35708 Haiger (DE)
(72) Erfinder: Achenbach, Heinz, 35236 Breidenbach (DE); Braun, Wilfried, 6344 Dietzhölztal-Ewersbach (DE); Heinbach, Hartmut, 57080 Siegen (DE); Heppner, Manfred, 35708 Haiger (DE)
(74) Vertreter: Fleck, Hermann-Joseph

(56) Entgegenhaltungen:
- EP-A- 0 709 998
- DE-A- 19 548 744
- US-A- 5 303 300

## Beschreibung

Die Erfindung betrifft eine Türsprechanlage mit einer Zweidraht-Busleitung, an die mehrere Teilnehmersprechstellen mit Sprecheinrichtung, mindestens eine Türstation mit mehreren Ruftasten und ein Netzgerät zur Stromversorgung der Teilnehmersprechstellen und Türstationen angeschlossen sind.

Bei einer derartigen Türsprechanlage ist es erforderlich, die von den Ruftasten der Türstationen oder anderen Eingabetasten über die Zweidraht-Busleitung an alle angeschlossenen Teilnehmersprechstellen übertragenen Rufnummern so zuzuordnen, dass nur die betroffene Teilnehmersprechstelle auf die zugeordnete Rufnummer reagiert und z.B. einen Rufton erzeugt und die Sprecheinrichtung an die Zweidraht-Busleitung anschaltet. Dies setzt voraus, dass die Türsprechanlage nach ihrer Installation programmiert werden muss. Dabei muss jede Teilnehmersprechstelle auf die ihr zugeordnete Rufnummer eingestellt werden, die beim Betätigen der zugeordneten Ruftaste ausgesandt wird.

Diese Programmierung ist eine zeitraubende und schwierige Handlung, da dazu zwei Personen erforderlich sind, von denen eine Person die Betätigung der Ruftasten übernimmt und die andere Person von Teilnehmersprechstelle zu Teilnehmersprechstelle geht, und für die Speicherung der anstehenden Rufnummer sorgt, auf die diese Teilnehmersprechstelle ansprechen soll. Zu dieser Programmierung der Türsprechanlage ist zudem eine getrennte drahtlose Sprechverbindung erforderlich, über die die beiden Personen die zu ergreifenden Maßnahmen absprechen können.

Aus der DE 195 48 744 A1 ist eine Türsprechanlage bekannt, wobei eine Türstation und Teilnehmersprechstellen vorgesehen sind. Die Teilnehmersprechstellen sind mit der Türstation über eine Zwei-Draht-Busleitung verbunden. Die Sprechstellen sind werksseitig mit einer Adresse fest vorprogrammiert. Diese Adresse kann während des Programmiervorganges den Ruftasten der Türstation zugeordnet werden.

Es ist Aufgabe der Erfindung, bei einer Türsprechanlage der eingangs erwähnten Art den Programmiervorgang zu erleichtern und zu beschleunigen, ohne dass die beiden Personen dafür eine getrennte drahtlose Sprechverbindung benötigen.

Diese Aufgabe wird nach der Erfindung dadurch gelöst, dass zum Programmieren der Teilnehmersprechstellen mit individuellen Rufnummern die Teilnehmersprechstellen und die Türstationen mit einem Mikrorechner versehen sind, dass in den Mikrorechnern der Türstationen individuelle Rufnummern gespeichert sind, die mit zugeordneten Ruftasten aussendbar sind, dass in den Teilnehmersprechstellen mit einer Programmiertaste ein Programmiervorgang einleitbar ist, in dem der Mikrorechner dieser Teilnehmersprechstelle zur Aufnahme und Speicherung einer zuzuordnenden Rufnummer geschaltet wird, dass bei eingeleitetem Programmiervorgang mit einem Meldesignal über die Zweidraht-Busleitung eine Sprechverbindung zu den Türstationen hergestellt wird, die mit dem Abschalten des Meldesignals beendet wird, dass mit dem Betätigen der zugeordneten Ruftaste in der Türstation die individuell zugeordnete Rufnummer ausgesendet wird, von der in den Programmiervorgang einbezogenen Teilnehmersprechstelle aufgenommen und in dessen Mikrorechner als Anruf-Adresse gespeichert wird,
und daß mit dem Auslösen der Programmiertaste der Programmiervorgang beendet und die Teilnehmersprechstelle in eine Anrufwartestellung eingestellt wird.

Mit der Programmiertaste kann über die Türsprechanlage selbst ein Betriebszustand "Programmieren" geschaffen und mit dem Melden der zu programmierenden Teilnehmersprechstelle die Sprechverbindung zur Türstation aufgebaut werden. Die Sprechverbindung wird bei jedem Programmiervorgang neu aufgebaut. Ist der Person an der Türstation über diese Sprechverbindung mitgeteilt, welche Ruftaste zu betätigen ist, dann kann die Sprechverbindung ausgelöst und die zuzuordnende Rufnummer übertragen und in der Teilnehmersprechstelle als Anruf-Adresse gespeichert werden, ohne daß die Übertragung der Rufnummer durch Sprachsignale beeinträchtigt werden kann. Es sind daher auch Übertragungsverfahren für die Rufnummern anwendbar, die den Sprachfrequenzbereich ausnützen.

Für das Meldesignal ist nach einer Ausgestaltung vorgesehen, daß die Teilnehmersprechstellen mit einem Handapparat ausgerüstet sind, bei dessen Abheben über einen Gabelumschaltekontakt das Meldesignal abgegeben und beim Wiederauflegen beendet wird, so daß schon während des Programmiervorganges übliche Bedienungsmaßnahmen zum Herstellen der Sprechverbindung durchzuführen sind.

Eine vorteilhafte Ausgestaltung sieht vor, daß die Teilnehmersprechstellen und die Türstationen über eine BUS-Kopplung an die Zweidraht-Busleitung angeschaltet sind, die eine Gleichrichter-Brückenschaltung zur stromrichtungsunabhängigen Anschaltung aufweist, damit auf die Polung der Teilnehmersprechstellen und der Türstationen beim Anschalten an die Zweidraht-Busleitung nicht geachtet werden muß.

Für die Bildung der individuellen Rufnummern kann nach einer Ausgestaltung vorgesehen sein, daß die Rufnummern als frequenzmodulierte, binärcodierte Codesignale übertragen werden und daß die BUS-Kopplungen mit Koppelkondensatoren wechselstrommäßig überbrückt sind.

Die Programmiertaste kann nach einer Ausgestaltung als bistabile Schalttaste ausgebildet sein, die in der Ein- und Ausschaltstellung die An- und Abschaltung des Programmiervorganges am Mikrorechner der Teilnehmersprechstelle anzeigt.

Eine eindeutige Trennung zwischen Sprechverkehr und Übertragung der zuzuordnenden Rufnummer wird dadurch sichergestellt, daß die individuell zuzuordnende Rufnummer nach dem Beenden der Sprechverbindung bei noch bestehendem Programmiervorgang durch Betätigen der zugeordneten Ruftaste übertragen wird.

Für den Aufbau der Türstation wird nach einer Ausgestaltung vorgesehen, daß die Türstation als Sprecheinrichtung einen Türlautsprecher aufweist und daß die Ruftasten, der Mikrorechner und die BUS-Kopplung zu einer Ruftasteneinheit zusammengefaßt sind.

Die Erfindung wird anhand eines in den Zeichnungen dargestellten Ausführungsbeispiels näher erläutert. Es zeigen:
Fig. 1 ein Prinzipschaltbild der Türsprechanlage,
Fig. 2 eine Teilnehmersprechstelle im Blockschaltbild und
Fig. 3 das Blockschaltbild einer Türstation.

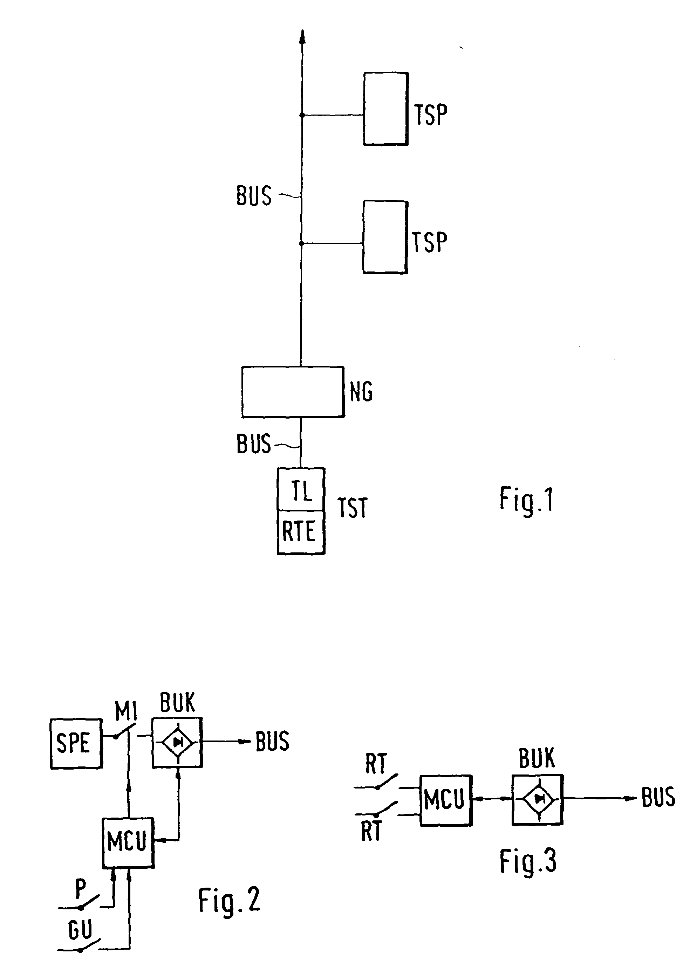

Wie Fig. 1 zeigt, umfaßt die Türsprechanlage eine Zweidraht-Busleitung BUS, an der mehrere Teilnehmersprechstellen TSP angeschaltet sind. In die Zweidraht-Busleitung BUS ist ein Netzgerät NG einbezogen, das die Stromversorgung der Teilnehmersprechstellen TSP übernimmt. Die Zweidraht-Busleitung BUS ist auch zu den Türstationen TST weitergeführt, die einen Türlautsprecher TL als Sprecheinrichtung und eine Ruftasteneinheit RTE umfassen. Das Netzgerät NG übernimmt auch die Stromversorgung für die Türstationen TST. Das Netzgerät NG kann mittels Koppelkondensatoren überbrückt sein, wenn die Übertragung der Rufnummern im Sprachfrequenzbereich erfolgt.

Der prinzipielle Aufbau einer Teilnehmersprechstelle TSP ist in Fig. 2 gezeigt. Die Ankopplung an die Zweidraht-Busleitung BUS übernimmt eine BUS-Kopplung BUK, die eine Gleichrichter-Brückenschaltung beinhaltet. Damit ist die Anschaltung polungsunabhängig und die Stromversorgung der Teilnehmersprechstelle TSP stets gewährleistet. Die Teilnehmersprechstelle TSP ist mit einem Mikrorechner MCU versehen, in den eine individuelle Rufnummer als Anruf-Adresse gespeichert werden kann. Steht diese Anruf-Adresse auf der Zweidraht-Busleitung BUS an, dann wird diese Teilnehmersprechstelle TSP in bekannter Weise gerufen und nach dem Melden des Teilnehmers mit der Türstation TST verbunden. Die Sprecheinrichtung SPE der Teilnehmersprechstelle TSP ist über den Mithörsperre-Schalter MI von der Zweidraht-Busleitung BUS abgeschaltet.

Der Mikrorechner MCU der Teilnehmersprechstelle TSP wird zum Programmieren von einer Programmiertaste P angesteuert und damit für den Programmiervorgang vorbereitet. Hat die Teilnehmersprechstelle TSP einen Handapparat, dann wird beim Abheben desselben ein Gabelumschaltekontakt GU geschlossen. Ist dazu noch die Programmiertaste P betätigt, dann zeigt dies dem Mikrorechner MCU an, daß eine Sprechverbindung zur Türstation TST erforderlich ist, über die sich die Personen zum Programmieren der Türsprechanlage unterhalten können. Der Mikrorechner MCU steuert den Mithörsperre-Schalter MI in die Schließstellung, so daß die Sprecheinrichtung SPE an der Zweidraht-Busleitung BUS angeschaltet ist. Die BUS-Kopplung BUK ist wechselstrommäßig überbrückt, so daß die Sprachsignale passieren können. Haben sich die Personen darüber verständigt, welche Ruftaste RT und damit Rufnummer der in den Programmiervorgang einbezogenen Teilnehmersprechstelle TSP zuzuordnen ist, dann wird die Sprechverbindung durch Auflegen des Handapparates durch Öffnen des Gabelumschaltekontaktes GU dem Mikrorechner MCU angezeigt. Die Programmiertaste P bleibt geschlossen. Mit dem Betätigen der zugeordneten Ruftaste RT wird eine individuelle Rufnummer, z.B. in Form eines frequenzmodulierten, binärcodierten Codesignals, zur Teilnehmersprechstelle TSP übertragen und dort vom Mikrorechner MCU aufgenommen und gespeichert. Die Türstation TST hat, wie Fig. 3 zeigt, eine Anzahl von Ruftasten RT, denen im Mikrorechner MCU individuelle Rufnummern zugeordnet sind, die beim Ansteuern des Mikrorechners MCU durch eine Ruftaste RT ausgesendet wird. Da sich der Mikrorechner MCU der Teilnehmersprechstelle TSP noch im Programmiervorgang befindet, wird die übertragene Rufnummer als Anruf-Adresse gespeichert. Die Programmiertaste P kann in die Ausschaltstellung gebracht werden. Damit wird der Programmiervorgang beendet und die Teilnehmersprechstelle TSP nimmt eine Anruf-Wartestellung ein und spricht nur an, wenn die ihr zugeteilte Rufnummer auf der Zweidraht-Busleitung BUS übertragen, d.h. ihre nunmehr zugeordnete Ruftaste RT betätigt wird. Der Mikrorechner MCU der gerufenen Teilnehmersprechstelle TSP schließt den Mithörsperre-Schalter MI und schaltet die Sprecheinrichtung SPE an die Zweidraht-Busleitung BUS an. In allen übrigen Teilnehmersprechstellen, die in gleicher Weise auf andere Rufnummern eingestellt werden, hat die nicht zutreffende Rufnummer keine Wirkung.

Der entscheidende Vorteil der neuen Programmierung liegt darin, daß die Sprecheinrichtungen der Türsprechanlage als Sprechverbindung beim Programmieren der Türsprechanlage verwendet werden können und so den Programmiervorgang erleichtern, beschleunigen und sicherer machen.

Die Bildung der Rufnummern kann auch anders vorgenommen werden. Dies bedingt lediglich eine andere Ausgestaltung der Mikrorechner MCU in den Teilnehmersprechstellen TSP und den Türstationen.

## Patentansprüche

1. Türsprechanlage mit einer Zweidraht-Busleitung, an die mehrere Teilnehmersprechstellen mit Sprecheinrichtung, mindestens eine Türstation mit mehreren Ruftasten und ein Netzgerät zur Stromversorgung der Teilnehmersprechstellen und Türstationen angeschlossen sind,
**dadurch gekennzeichnet,**
**dass** zum Programmieren der Teilnehmersprechstellen (TSP) mit individuellen Rufnummern die Teilnehmersprechstellen (TSP) und die Türstationen (TST) mit einem Mikrorechner (MCU) versehen sind,
**dass** in den Mikrorechnern (MCU) der Türstationen (TST) individuelle Rufnummern gespeichert sind, die mit zugeordneten Ruftasten (RT) aussendbar sind,
**dass** in den Teilnehmersprechstellen (TSP) mit einer Programmiertaste (P) ein Programmiervorgang einleitbar ist, in dem der Mikrorechner (MCU) dieser Teilnehmersprechstelle (TSP) zur Aufnahme und Speicherung einer zuzuordnenden Rufnummer geschaltet wird,
**dass** die Teilnehmersprechstellen Mittel aufweisen, die bei eingeleitetem Programmiervorgang verwendet sind, um mit einem Meldesignal über die Zweidraht-Busleitung (BUS) eine Sprechverbindung zu den Türstationen (TST) herzustellen und mit dem Abschalten des Meldesignals zu beenden,
**dass** die Türstationen Mittel aufweisen, um mit dem Betätigen der zugeordneten Ruftaste (RT) in der Türstation (TST) die individuell zugeordnete Rufnummer auszusenden,
**dass** die Türsprechanlage Mittel aufweist, um diese zugeordnete Rufnummer in der in den Programmiervorgang einbezogenen Teilnehmersprechstelle (TSP) aufzunehmen und in dessen Mikrorechner als Anruf-Adresse zu speichern und dass die Teilnehmersprechstellen Mittel aufweisen, um mit dem Auslösen der Programmiertaste (P) den Programmiervorgang zu beenden und die Teilnehmersprechstelle (TSP) in eine Anrufwartestellung einzustellen.

2. Türsprechanlage nach Anspruch 1,
**dadurch gekennzeichnet,**
**daß** die Teilnehmersprechstellen (TSP) mit einem Handapparat ausgerüstet sind, bei dessen Abheben über einen Gabelumschaltekontakt (GU) das Meldesignal abgegeben und beim Wiederauflegen beendet wird.

3. Türsprechanlage nach Anspruch 1 oder 2,
**dadurch gekennzeichnet,**
**daß** die Teilnehmersprechstellen (TSP) und die Türstationen (TST) über eine BUS-Kopplung (BUK) an die Zweidraht-Busleitung (BUS) angeschaltet sind, die eine Gleichrichter-Brückenschaltung zur stromrichtungsunabhängigen Anschaltung aufweist.

4. Türsprechanlage nach einem der Ansprüche 1 bis 3,
**dadurch gekennzeichnet,**
**daß** die Rufnummern als frequenzmodulierte, binärcodierte Codesignale übertragen werden und
**daß** die BUS-Kopplungen (BUK) mit Koppelkondensatoren wechselstrommäßig überbrückt sind.

5. Türsprechanlage nach einem der Ansprüche 1 bis 4,
**dadurch gekennzeichnet,**
**daß** die Sprechverbindung zwischen der in den Programmiervorgang einbezogenen Teilnemersprechstelle (TSP) und den Türstationen (TST) vom Mikrorechner (MCU) dieser Teilnehmersprechstelle (TSP) über einen Mithörsperrschalter (MI) gesteuert wird, der die Sprecheinrichtung (SPE) der Teilnehmersprechstelle (TSP) während des Programmievorganges an die Zweidraht-Busleitung (BUS) an- und danach wieder abschaltet.

6. Türsprechanlage nach einem der Ansprüche 1 bis 5,
**dadurch gekennzeichnet,**
**daß** die Programmiertaste (P) als bistabile Schalttaste ausgebildet ist.

7. Türsprechanlage nach einem der Ansprüche 1 bis 6,
**dadurch gekennzeichnet,**
**daß** die individuell zuzuordnende Rufnummer nach dem Beenden der Sprechverbindung bei noch bestehendem Programmiervorgang durch Betätigen der zugeordneten Ruftaste (RT) übertragen wird.

8. Türsprechanlage nach einem der Ansprüche 1 bis 7,
**dadurch gekennzeichnet,**
**daß** die Türstation (TST) als Sprecheinrichtung einen Türlautsprecher (TL) aufweist und
**daß** die Ruftasten (RT), der Mikrorechner (MCU) und die BUS-Kopplung (BUK) zu einer Ruftasteneinheit zusammengefaßt sind.

## Claims

1. Door intercom system with a two-wire bus line to which a number of user substations with intercom facility, at least one door intercom station with a number of call buttons and a power supply unit for supplying the user substations and door intercom stations with power are connected, **characterized in that**, for programming the user substations (TSP) with individual call numbers, the user substations (TSP) and the door intercom stations (TST) are provided with a microcomputer (MCU),
that in the microcomputers (MCU) of the door intercom stations (TST) individual call numbers are stored which can be sent out with associated call buttons (RT),
that in the subscriber substations (TSP), a programming key (P) can be used for initiating a programming process in which the microcomputer (MCU) of this user substation (TSP) is switched for receiving and storing an allocatable call number,
that the subscriber substations have means which, when the programming process is initiated, are used for establishing an intercom connection to the door intercom stations (TST) with a report signal via the two-wire bus line (BUS) and ending it with the switching-off of the report signal,
that the door intercom stations have means for sending out the individually allocated call number with the operation of the associated call button (RT) in the door intercom station (TST),
that the door intercom system has means for accepting this allocated call number in the subscriber substation (TSP) included in the programming process and storing it as call address in its microcomputer and that the subscriber substations have means for ending the programming process with the release of the programming key (P) and adjusting the subscriber substation (TSP) into a call waiting position.

2. Door intercom system according to Claim 1, **characterized in that** the subscriber substations (TSP) are equipped with a handset, on the lifting off of which the report signal is delivered via a cradle switch contact (GU) and is ended when it is hung up again.

3. Door intercom system according to Claim 1 or 2, **characterized in that** the subscriber substations (TSP) and the door intercom stations (TST) are connected via a BUS coupling (BUK) to the two-wire bus line (BUS) which has a rectifier bridge circuit for current-direction-independent connection.

4. Door intercom system according to one of Claims 1 to 3, **characterized in that** the call numbers are transmitted as frequency-modulated binary-coded code signals and
that the BUS couplings (BUK) are bypassed with respect to alternating current by means of coupling capacitors.

5. Door intercom system according to one of Claims 1 to 4, **characterized in that** voice connection between the subscriber substation (TSP) included in the programming process and the door intercom stations (TST) is controlled by the microcomputer (MCU) of this subscriber substation (TSP) via a listening inhibit switch (MI) which switches the intercom facility (SPE) of the subscriber substation (TSP) to the two-wire bus line (BUS) during the programming process and then switches it off again.

6. Door intercom system according to one of Claims 1 to 5, **characterized in that** the programming key (P) is constructed as bistable switching key.

7. Door intercom system according to one of Claims 1 to 6, **characterized in that** the individually allocated call number, after the intercom connection has ended, is transmitted by operating the associated call button (RT) if the programming process still exists.

8. Door intercom system according to one of Claims 1 to 7, **characterized in that** the door intercom station (TST) has a door loudspeaker (TL) as intercom facility and
that the call buttons (RT), the microcomputer (MCU) and the BUS coupling (BUK) are combined to form one call button unit.

## Revendications

1. Dispositif d'interphone avec ligne de bus à deux fils, auquel sont connectés plusieurs terminaux vocaux avec dispositif vocal, au moins un poste portier équipé de plusieurs touches d'appel et un bloc d'alimentation pour l'alimentation électrique des terminaux vocaux et des postes portiers,
**caractérisé en ce que** pour la programmation des terminaux vocaux (TSP) avec des numéros d'appel individuels, les terminaux vocaux (TSP) et les postes portiers (TST) sont munis d'un micro-ordinateur (MCU),
**en ce que** dans les micro-ordinateurs (MCU) des postes portiers (TST) des numéros d'appel individuels sont mémorisés qui peuvent être envoyés par des touches d'appel (RT) associées,
**en ce qu'**un processus de programmation peut être déclenché dans les terminaux vocaux (TSP) par une touche de programmation (P), dans lequel le micro-ordinateur (MCU) de ce terminal vocal (TSP) est commuté pour enregistrer et mémoriser un numéro d'appel à associer,
**en ce que** les terminaux vocaux présentent des moyens qui sont utilisés, lorsque le processus de programmation a été déclenché, pour établir à l'aide d'un signal de réponse par l'intermédiaire de la ligne de bus à deux fils (BUS) une communication vocale avec les postes portiers (TST) et de la terminer par la coupure du signal de réponse,
**en ce que** les postes portiers présentent des moyens pour envoyer le numéro d'appel associé individuellement par l'actionnement de la touche d'appel associée (RT) dans le poste portier (TST),
**en ce que** le dispositif d'interphone présente des moyens pour enregistrer ce numéro d'appel associé dans le terminal vocal (TSP) impliqué dans le processus de programmation et pour le mémoriser dans son micro-ordinateur en tant qu'adresse d'appel, et **en ce que** les terminaux vocaux présentent des moyens pour terminer le processus de programmation par l'actionnement de la touche de programmation (P) et pour mettre le terminal vocal (TSP) en position attente d'appel.

2. Dispositif d'interphone selon la revendication 1, **caractérisé en ce que** les terminaux vocaux (TSP) sont équipés d'un combiné dont le décrochage délivre par l'intermédiaire d'un contact de commutation à fourche (GU) le signal de réponse et dont le raccrochage coupe ledit signal.

3. Dispositif d'interphone selon la revendication 1 ou 2, **caractérisé en ce que** les terminaux vocaux (TSP) et les postes portiers (TST) sont connectés par l'intermédiaire d'un couplage de BUS (BUK) à la ligne de bus à deux fils (BUS) qui présente un couplage redresseur monté en pont pour une connexion indépendante du sens du courant.

4. Dispositif d'interphone selon l'une quelconque des revendications 1 à 3, **caractérisé en ce que** les numéros d'appel sont transmis comme des signaux de code modulés en fréquence, codés de façon binaire, et **en ce que** les couplages de BUS (BUK) sont shuntés en courant alternatif par des condensateurs de couplage.

5. Dispositif d'interphone selon l'une quelconque des revendications 1 à 4, **caractérisé en ce que** la communication vocale entre le terminal vocal (TSP) impliqué dans le processus de programmation et les postes portiers (TST) est commandée par le micro-ordinateur (MCU) de ce terminal vocal (TSP) par l'intermédiaire d'une touche de blocage d'écoute (MI) qui connecte le dispositif vocal (SPE) du terminal vocal (TSP) pendant le processus de programmation à la ligne de bus à deux fils (BUS) et le déconnecte ensuite de nouveau.

6. Dispositif d'interphone selon l'une quelconque des revendications 1 à 5, **caractérisé en ce que** la touche de programmation (P) est réalisée comme une touche de commutation bistable.

7. Dispositif d'interphone selon l'une quelconque des revendications 1 à 6, **caractérisé en ce que** le numéro d'appel à associer individuellement est transmis à la fin de la communication vocale, alors que le processus de programmation est toujours en cours, par l'actionnement de la touche d'appel (RT) associée.

8. Dispositif d'interphone selon l'une quelconque des revendications 1 à 7, **caractérisé en ce que** le poste portier (TST) présente un haut-parleur de porte (TL) en tant que dispositif vocal et **en ce que** les touches d'appel (RT), le micro-ordinateur (MCU) et le couplage de bus (BUK) sont regroupés en une unité de touches d'appel.
